(19) Europäisches Patentamt

European Patent Office

Office européen des brevets

(11) EP 1 536 056 A2

(12) EUROPEAN PATENT APPLICATION

(43) Date of publication:
01.06.2005 Bulletin 2005/22

(51) Int Cl.⁷: **D06N 3/00**, B32B 5/26, D04H 13/00

(21) Application number: 04027415.1

(22) Date of filing: 18.11.2004

(84) Designated Contracting States:
AT BE BG CH CY CZ DE DK EE ES FI FR GB GR HU IE IS IT LI LU MC NL PL PT RO SE SI SK TR
Designated Extension States:
AL HR LT LV MK YU

(30) Priority: 25.11.2003 JP 2003393250
24.02.2004 JP 2004047822

(71) Applicant: Kuraray Co., Ltd.
Kurashiki-shi, Okayama (JP)

(72) Inventors:
• Tanaka, Kazuhiko
Kurashiki-shi Okayama (JP)
• Yamasaki, Tsuyoshi
Kurashiki-shi Okayama (JP)

• Nakatsuka, Hitoshi
Kurashiki-shi Okayama (JP)
• Meguro, Masasi
Kurashiki-shi Okayama (JP)
• Koga, Nobuhiro
Kurashiki-shi Okayama (JP)
• Kawamoto, Masao
Kurashiki-shi Okayama (JP)
• Nakayama, Kimio
Kurashiki-shi Okayama (JP)
• Yorimitsu, Shuhei
Kurashiki-shi Okayama (JP)

(74) Representative: VOSSIUS & PARTNER
Siebertstrasse 4
81675 München (DE)

(54) **Artificial leather sheet substrate and production method thereof**

(57) The artificial leather sheet substrates of the invention comprise a united laminate structure of a nonwoven fabric layer A and a knitted or woven fabric layer B and an elastic polymer C impregnated into the united laminate structure. The nonwoven fabric layer A and the knitted or woven fabric layer B are strongly bonded to each other by entanglement. A portion of the microfine fibers constituting the knitted or woven fabric layer B are exposed to the outer surface of the nonwoven fabric layer A. Therefore, the artificial leather sheet substrates exhibit excellent mechanical properties such as resistance to tear stress. Having a high density as compared with conventional artificial leathers, the artificial leather sheet substrates have feel and densified feel similar to those of natural leathers.

EP 1 536 056 A2

**Description**

The present invention relates to a substrate capable of providing a high-tenacity and high-density artificial leather sheet that is excellent particularly in tear strength and also excellent in aesthetically pleasing appearance, color development and fastness.

Conventionally, artificial leathers have been mainly made of microfine fibers and elastic polymers to imitate the flexibility and mechanical properties of natural leathers, and various production methods have been proposed. At present, however, artificial leathers satisfying both the feel and mechanical properties like natural leathers have not yet been obtained.

For example, flexible artificial leathers have been produced generally by making microfine fiber-forming composite fibers into staples; making the staples into webs by using card, cross-lapper, random webber, etc.; entangling the fibers of web by needle punching, etc. to form a nonwoven fabric; impregnating an elastic polymer such as polyurethane into the nonwoven fabric; and converting the composite fibers into microfine fibers by removing one component from the composite fibers. The artificial leather produced by this method, however, is insufficient in mechanical properties such as tensile strength and abrasion resistance.

In addition to the above technique of flexibilizing, there has been proposed a method for enhancing mechanical properties of artificial leather sheets such as tensile strength and abrasion resistance, in which the composite fibers in the needle-punched nonwoven fabric are divided by a high-speed jet of liquid to entangle the microfine fibers. By the proposed method, although the microfine fibers in the surface portion of nonwoven fabric are entangled, the microfine fibers inside the nonwoven fabric are substantially not entangled. To ensure the entanglement inside the nonwoven fabric, a high-energy jet of liquid is needed. However, this increases production costs and reduces the quality of resultant artificial leathers because of striking roughness on the nonwoven fabric surface caused by jet of liquid.

JP 60-29775 B discloses a method for producing a leather-like sheet in which a stack of two sheets each made of sea-island fibers of 10 mm or less long and a knitted or woven fabric disposed between the sheets is subjected to a jet treatment of high-speed liquid stream. This method is somewhat successful for producing a high-density suede having short naps, but has drawbacks of allowing single fibers to quite easily fall out and being poor in abrasion resistance.

In another known method, a stack comprising two nonwoven fabrics and a knitted or woven fabric disposed between nonwoven fabrics or a stack comprising a nonwoven fabric and a knitted or woven fabric overlaid on the nonwoven fabric is needle-punched. However, in the known methods, the effect of the knitted or woven fabric to reinforce the leather-like sheet is lessened and a sufficient effect cannot be expected, because the fibers of knitted or woven fabric are hooked to the barbs of needles to significantly damage the textile and fibers of knitted or woven fabric. To enhance the dense feel, appearance (particularly in case of forming napped surface), quality, etc. of final products, it is required to entangle the fibers more sufficiently. If the number of needle punching is increased to achieve a sufficient entanglement, the damage of textile and fibers of the knitted or woven fabric correspondingly becomes severe to lessen the strength of the knitted or woven fabric and reduce its reinforcing effect. If the ends of broken fibers caused by the damage of the knitted or woven fabric come out to the surface of the nonwoven fabric, the appearance is significantly ruined because thick fibers of the knitted or woven fabric scatter among microfine fibers on the surface.

The techniques for entangling a nonwoven fabric and a knitted or woven fabric by a similar needle punching are disclosed in JP 57-25482 A and JP 57-82583 A. In the proposed methods, to obtain a high seam strength and tear strength, microfine fibers and multi-filament yarns constituting a knitted or woven fabric are entangled by allowing the microfine fibers to enter into intervening spaces between respective filaments of the multi-filament yarns. To attain such an entanglement by needle punching, the punching conditions should be selected so that the barbs of needles work on respective constituting filaments. However, under such punching conditions, respective filaments constituting the knitted or woven fabric are readily damaged to cause the drawbacks as mentioned above, i.e., the reduction of tenacity of the knitted or woven fabric and the significant ruin of the appearance due to exposed ends of broken filaments on the nonwoven fabric surface. To avoid the damage of filaments, etc., a high-pressure hydroentanglement is actually employed in the proposed methods. Thus, as the entanglement method applicable to the production of a composite laminate containing a knitted or woven fabric, a high-pressure hydroentanglement has been mainly investigated, and a needle punching method has been generally not investigated.

In the proposed methods, since the microfine fibers are entangled with the multi-filament yarns by allowing the microfine fibers to enter into the intervening spaces between the constituting filaments of the multi-filament yarns, the fiber entanglement occurs even in the inside of yarns constituting the knitted or woven fabric to make the feel, particularly flexibility, poor. Thus, if the tenacity/elongation properties are held important, the flexibility is reduced instead, namely, these properties are contradictory with each other.

JP 5-24272 B teaches that a sheet produced by impregnating an elastic polymer into a united composite fabric of a nonwoven fabric made of microfine fibers and a knitted or woven fabric made of microfine fibers is useful as a leather-like sheet substrate because of its flexibility and excellent surface flatness after elongation. However, only sheets with low density can be produced by the production method taught therein, and high-quality sheets having compact feel and dense feel like natural leathers cannot be produced.

Conventionally, suede-finished artificial leathers are colored generally by dyeing because a transparent feeling unique to dyes is preferred by end users. The fiber surface area per unit surface area of suede-finished artificial leathers extremely increases as the constituting microfine fibers become finer, thereby strengthening the tendency to render the dyed color whitish by irregular reflection of light. Therefore, a large amount of dye is necessary to attain a deep color by only dyeing. The use of a large amount of dye increases the costs and tends to make the quality of resultant suede-finished artificial leathers poor in color fastness to light and rubbing.

Various methods have been proposed to improve the color fastness to light by mixing a pigment with the material for microfine fibers. For example, proposed are a sea-island composite fiber made of poly(ethylene terephthalate) added with 1% of carbon black (JP 48-11925 B), a mix spun fiber having an island component made of nylon 6 added with 5% of a red pigment (JP 55-504 B), a mix spun fiber having an island component made of nylon 6 added with 5% of carbon black (JP 59-12785 B), and a multi-layered hollow fiber in which polyester layers and polyamide layers, which are polymerized in the presence of 5% of a pigment mainly comprising carbon black, are stacked in side-by-side configuration (JP 59-44416 B). However, the addition of pigment as large as 5% by mass or more is needed to make the coloration of microfine fibers of 0.1 dtex or less to a sufficiently satisfactory level. The addition of a large amount of pigment increases the melt viscosity to necessarily deteriorate the spinnability because of breaking of fibers, clogging of nozzle and clogging of filter during spinning and reduce the properties of fibers. Thus, it is very difficult to obtain a substrate which satisfies both the color development and the mechanical properties.

The pigments to be used include organic pigments and inorganic pigments. In the production of suede-finished artificial leathers, microfine fiber-forming fibers are converted into microfine fibers by removing one of the components with an organic solvent. Since the organic solvent dissolves organic pigments, the pigment usable is substantially limited to inorganic pigments.

An object of the invention is to solve all the above problems and provide a substrate capable of producing an artificial leather sheet (leather-like sheet) which has a feel comparable to natural leathers, excellent mechanical properties such as tear strength, excellent flexibility and aesthetically appealing appearance, and compact and dense feel like natural leathers.

As a result of extensive study in view of achieve the above object, the invention has been accomplished.

Thus, the invention provides an artificial leather sheet substrate (leather-like sheet substrate) comprising at least one nonwoven fabric layer A, a knitted or woven fabric layer B and an elastic polymer C, which satisfies the following requirements 1 to 6:

(1) the nonwoven fabric layer A is made of microfine staples having a fiber length of 18 to 110 mm and a single fiber fineness of 0.0003 to 0.4 dtex;
(2) the knitted or woven fabric layer B is made of microfine filaments randomly and slightly crimped having a single fiber fineness of 0.0003 to 3.5 dtex;
(3) the nonwoven fabric layer A and the knitted or woven fabric layer B are entangled to form a united laminate structure;
(4) a surface exposure of the microfine filaments constituting the knitted or woven fabric layer B on a surface of the nonwoven fabric layer A opposite to a surface bonded to the knitted or woven fabric B is 0.3 to 20% by area;
(5) the united laminate structure of the nonwoven fabric layer A and knitted or woven fabric layer B is impregnated with the elastic polymer C; and
(6) a density of the artificial leather sheet substrate is 0.50 to 0.85 g/cm$^3$.

The invention further provides a method for producing an artificial leather sheet substrate, which comprises the following sequential steps of

(i) producing a web from microfine fiber-forming composite staples having a fiber length of 20 to 110 mm, which comprises a water-soluble, thermoplastic vinyl alcohol-based polymer Sa and a crystalline thermoplastic polymer Sb having a melting point of 160°C or higher;
(ii) superposing the web obtained in the step i and a knitted or woven fabric to obtain superposed fabrics, and entangling the superposed fabrics by a needle punching and/or a high-pressure stream of water to obtain a united laminate structure of the web and the knitted or woven fabric, the knitted or woven fabric being made of microfine fiber-forming composite filaments which comprises a water-soluble, thermoplastic vinyl alcohol-based polymer Fa and a crystalline thermoplastic polymer Fb having a melting point of 160°C or higher;
(iii) shrinking the united laminate structure obtained in the step ii to reduce a surface area to 40 to 90% of a surface area before shrinking;
(iv) impregnating the united laminate structure after the shrinking treatment with a solution or dispersion of an elastic polymer and solidifying the elastic polymer; and

(v) removing the water-soluble, thermoplastic vinyl alcohol-based polymers Sa and Fa by dissolution into water to convert the microfine fiber-forming composite staples into bundles of microfine staples having a single fiber fineness of 0.0003 to 0.4 dtex and the microfine fiber-forming composite filaments into bundles of microfine filaments having a single fiber fineness of 0.0003 to 3.5 dtex;

with the proviso that the step iv and the step v may be carried out in a reverse order.

In a preferred embodiment of the invention, a web is first produced from microfine fiber-forming composite fibers which are capable of forming microfine fibers having a single fiber fineness of 0.0003 to 0.4 dtex. Then, the web and a knitted or woven fabric are superposed. The knitted or woven fabric is made of fibers having a single fiber fineness of 3.5 dtex or less, preferably 0.0003 to 0.4 dtex, or more preferably made of multifilaments having a twist number of 10 to 650 twists/m which is constituted by filaments capable of being converted into microfine filaments. The superposed nonwoven fabric and knitted or woven fabric are subjected to entangling treatment by a needle punching and/or a high-pressure stream of water. By the entangling treatment, the respective fibers constituting the web are sufficiently entangled, and simultaneously, the fibers constituting the web and the fibers constituting the knitted or woven fabric are sufficiently entangled to form a united laminate structure of the nonwoven fabric and the knitted or woven fabric. Thereafter, a step for impregnating the elastic polymer and a subsequent step for forming microfine fibers, or alternatively, the step for forming microfine fibers and the subsequent step for impregnating the elastic polymer are followed. The microfine fibers constituting the nonwoven fabric layer A and/or the microfine fibers constituting the knitted or woven fabric layer B preferably contain a pigment in an amount of 0.01 to 5% by mass.

The united laminate structure of the nonwoven fabric layer A and the knitted or woven fabric layer B referred to herein means a laminated structure strongly bonded by entanglement in which the microfine fibers constituting the nonwoven fabric layer A are not only entangled with each other while keeping their fibrous forms but also entangled with the fibers constituting the knitted or woven fabric layer B by entering into the texture of the knitted or woven fabric layer B through the intervening spaces formed by random and slight crimps of single fibers constituting the knitted or woven fabric layer B, thereby making the laminate structure to cause structural fracture of the nonwoven fabric layer A and/or the knitted or woven fabric layer B rather than peeling between the nonwoven fabric layer A and the knitted or woven fabric layer B even when a strong peel stress is applied. The random and slight crimps referred to herein mean a crimped state with a crimp number of 5 to 50 crimps/cm which occurs simultaneously in the step of converting the microfine fiber-forming composite filaments constituting the knitted or woven fabric into microfine fibers by extraction.

The invention will be explained below in more detail.

The artificial leather sheet substrate (leather-like sheet substrate) of the invention comprises a united laminate structure of a nonwoven fabric layer A and a knitted or woven fabric layer B such as nonwoven fabric layer A/knitted or woven fabric layer B and nonwoven fabric layer A/knitted or woven fabric layer B/nonwoven fabric layer A, and an elastic polymer C impregnated into the united laminate structure.

The nonwoven fabric layer A is made of entangled microfine staples having a fiber length of 18 to 110 mm. The single fiber fineness of the microfine staples is 0.0003 to 0.4 dtex, preferably 0.003 to 0.2 dtex, and more preferably 0.007 to 0.1 dtex, in view of enhancing the performance of artificial leather sheet such as flexibility, hand touch, quality of appearance and tenacity.

The polymer for constituting the microfine staples is preferably selected from fiber-forming polymers such as, but not particularly limited to, polyesters including polyethylene terephthalate (PET), polytrimethylene terephthalate (PTT), polybutylene terephthalate (PBT), polylactic acid (PLLA) and polyester elastomer; polyamides including nylon 6, nylon 66, nylon 610, aromatic polyamides and polyamide elastomer; polyurethanes; polyolefins; and acrylonitrile polymers, with PET, PTT, PBT, PLLA, nylon 6 and nylon 66 being preferred in view of the feel and practical performance of final products. The melting point of polymer is preferably 160 to 350°C. Melting points of lower than 160°C are not preferred in view of practical utility, because the tenacity of resultant microfine fibers is poor to make the shape stability of resultant artificial leather sheet substrates poor. If higher than 350°C, a stable spinning operation becomes difficult because it is difficult to control the melt viscosity of polymer within a level suitable for spinning. The melting point of polymer for use as the raw material for each of composite fibers to constitute the nonwoven fabric layer A and the knitted or woven fabric layer B was measured by differential scanning calorimetry (DSC). The melting point is a peak top temperature of endothermic peak showing the melting point of polymer obtained by heating the polymer to 250°C or a higher predetermined temperature at a temperature rising speed of 10°C/min in nitrogen, cooling to room temperature, and then heating again in the same manner as above.

The knitted or woven fabric layer B is made of randomly and slightly crimped microfine filaments having a single fiber fineness of 0.0003 to 3.5 dtex, preferably 0.0003 to 0.4 dtex. When the single fiber fineness of the microfine filaments is similar to that of the microfine staples constituting the nonwoven fabric layer A, the appearance and aesthetic attractiveness of resultant artificial leathers are drastically improved.

The polymer for constituting the microfine filaments is preferably selected from fiber-forming polymers such as, but not particularly limited to, polyesters including PET, PTT, PBT, PLLA and polyester elastomer; polyamides including nylon 6, nylon 66, nylon 610, aromatic polyamides and polyamide elastomer; polyurethanes; polyolefins; and acrylonitrile polymers, with PET, PTT, PBT, PLLA, nylon 6 and nylon 66 being preferred in view of the feel and practical performance of final products. The melting point of polymer is preferably 160 to 350°C for the same reason as mentioned above with respect to the polymer for constituting the nonwoven fabric layer A.

Any types of elastic polymers that have been conventionally used as impregnants for artificial leather sheets may be used as the elastic polymer C. Examples thereof include rubber elastic polymers such as urethane polymers, acrylic polymers, SBR, NBR and polyamino acid, with the urethane polymers and acrylic polymers being preferred. These elastic polymers may be used alone or in mixture or combination of two or more.

To allow the artificial leather sheet substrate to develop a color sufficient for use as artificial leathers even without being dyed, or to ensure the sufficient coloration only with a small amount of dye when the dyeing is desired, the microfine fibers constituting the nonwoven fabric layer A and/or the microfine fibers constituting the knitted or woven fabric layer B preferably contain a pigment in an amount of 0.01 to 5% by mass. The addition amount of the pigment is preferably 0.01 to 1% by mass for obtaining a final appearance with pastel shade of colors, 1 to 2% by mass for a final appearance with medium shade of colors, and 2 to 5% by mass for a final appearance with deep shade of colors. If exceeding 5% by mass, the spinnability may become poor and the tenacity of fibers may be reduced to likely result in the deterioration of tear strength of resultant artificial leathers. If the shade of colors of the microfine filaments constituting the knitted or woven fabric layer B which are exposed to the surface of the artificial leather sheet substrate is strikingly different from the shade of colors of the surrounding nonwoven fabric layer A, the appearance is impaired, so long as a special appearance such as mélange fabric is intended. Therefore, it is preferred that the microfine fibers constituting the nonwoven fabric layer A and the knitted or woven fabric layer B are substantially the same or as nearer as possible in the single fiber finenesses and the addition amounts of pigment. The ratio of the single fiber finenesses of the microfine fibers (knitted or woven fabric layer B/nonwoven fabric layer A) is preferably 0.5 to 4.0, preferably 0.6 to 2.0. The ratio of the addition amounts of pigment (knitted or woven fabric layer B/nonwoven fabric layer A) is preferably 0.1 to 10, more preferably 0.5 to 5.

As described below, it is preferred to form the microfine fibers by the extractive removal of the water-soluble, thermoplastic vinyl alcohol-based polymer from microfine fiber-forming fibers such as sea-island composite fibers. The solvent for extraction is preferably water rather than organic solvents. By the extractive removal using water, the percent residual of pigment can be easily maintained at a level as high as 90% by mass or more irrespective of the types of pigments to favorably prevent the development of the artificial leather sheet substrate to lighter colors and the contamination of extraction bath due to the extraction treatment. The percent residual of pigment is determined by knitting microfine fiber-forming fibers obtained by spinning and drawing into a cylindrical form, extracting the sea component under conditions for substantially complete removal (solvent temperature, bath ratio of solvent and fibers, extraction time, squeeze or not, etc.), and then calculating from the following equation:

$$\text{Percent residual of pigment (\%)}$$

$$= 100 \times [1 - (S \times T/100 - U)/(S \times T/100 \times V/100)$$

wherein S is a mass (g) of the microfine fiber-forming fibers before extraction, T is a content (% by mass) of island component of the microfine fiber-forming fibers before extraction, U is a mass (g) of island component of the microfine fiber-forming fibers (microfine fibers) after extraction, and V is an addition amount (% by mass) of pigment into the island component of the microfine fiber-forming fibers before extraction.

Usable pigments are preferably selected from any types of pigments generally added to polymers for coloring, for example, inorganic pigments such as titanium oxide, carbon black, silica, chrome red and molybdenum red and organic pigments such as phthalocyanine pigments and anthraquinone pigments, with carbon black being preferred because only the shade of achromatic color can be emphasized. The average primary particle size of pigment to be added is preferably 10 to 60 nm because the pigment particles having such a particle size are uniformly mixed with the island component polymer for constituting microfine fibers and easily embedded therein. If less than 10 nm, the pigment particles tend to agglomerate during spinning to fail in the production of uniform fibers, lessen the quality stability because of uneven color shades and mechanical properties, and reduce the spinnability. If exceeding 60 nm, the color fastness to light and color development of resultant suede-finished artificial leather tend to be deteriorated, and the spinnability tends to be reduced because filters are likely to be clogged in the spinning step. The pigment particles are present generally in the form of aggregates of a number of primary particles. The average particle size of aggregates is preferably 20 to 200 nm because the aggregates having such a particle size are uniformly mixed with the island component polymer for constituting microfine fibers and easily embedded therein to ensure good spinnability, color development and color fastness to light.

To uniformly disperse the pigment, the addition of pigment is effected preferably by a masterbatch method in which the island component polymer for constituting microfine fibers and the pigment are kneaded in a compounder such as extruder and then made into pellets. The microfine fiber-forming component may be added with, in addition to the pigment, fine particles, stabilizer such as copper compound, colorant, ultraviolet absorber, light stabilizer, anti-oxidant, anti-static agent, flame retardant, plasticizer, lubricant, or crystallization retardant during its production by polymerization or in subsequent steps in an amount not adversely affect the object and effect of the invention. Usable fine particles are inert fine particles such as, but not limited to, silica, alumina, titanium oxide, calcium carbonate and barium carbonate. These fine particles may be added singly or in combination of two or more. The addition of such fine particles improves the spinnability and drawing properties in some cases.

The method for producing the artificial leather sheet substrate of the invention comprises (i) step of producing web, (ii) step of forming united laminate structure of web and knitted or woven fabric by entanglement, (iii) step of shrinking treatment, (iv) step of impregnating elastic polymer, and (v) step of making microfine fibers. The step iv of impregnating elastic polymer and the step v of making microfine fibers can be carried out in a reverse order.

(i) Step of Producing Web

The raw fibers for producing a web which is finally made into the nonwoven fabric layer A is microfine staples or microfine fiber-forming composite staples produced by spinning and drawing, with the microfine fiber-forming composite staples being preferred. The raw fibers are made into a web by using a card, a cross lapper, a random webber, etc.

It is important for the raw fibers to have a fiber length of 20 mm or longer. If less than 20 mm, the entanglement cannot be effectively carried out in the subsequent step. The upper limit of the fiber length is 110 mm in view of easiness of production. The final product may contain microfine fibers shortened to a length of less than 20 mm by cutting due to slicing or buffing of fabric in post processing. Since these shortened microfine fibers occur after the effective entanglement, their presence in the final products is allowable and has no specific disadvantage. Since the raw fibers shrink slightly in the subsequent production steps, it is important for the microfine fibers constituting the nonwoven fabric layer A to have a fiber length of 18 to 110 mm in view of improving the entangling state and properties of the artificial leather sheet substrate.

The microfine fiber-forming composite fibers referred to herein are composite fibers which are capable of being converted into bundles of microfine fibers by physical or chemical treatments, including extractable composite fibers having fiber cross section of sea-island structure, multi-layered structure, etc. and easily splittable composite fibers comprising at least two polymer components which are less compatible with each other and adjacently aligned in various configurations. These composite fibers may be produced by a chip blend method in which two or more polymers having different solubilities to a specific solvent are blended as chip raw materials, or by a spinning method represented by a so-called composite spinning method in which each component polymer is separately melted and then extruded from a nozzle into an intended composite structure. The extractable composite fibers are converted into bundles of microfine fibers by the removal of the removable polymer with chemical treatment. The easily splittable composite fibers are converted into bundles of microfine fibers by the physical or chemical treatment to cause peel-splitting along the interfaces between the component polymers. The single fiber fineness of microfine fiber-forming composite fibers is preferably 1 to 6 dtex in view of productivity of web production.

Polymers for constituting the fiber-forming component (microfine fibers constituting the nonwoven fabric layer A) of composite fibers such as sea-island fibers are mentioned above. As the component to be removed, usable are one or more polymers extractable by a specific solvent such as polystyrene and its copolymers, polyethylene, polyvinyl alcohol (PVA), copolyesters and copolyamides. In the invention, collectively taking environmental pollution, shrinking characteristics during the removal by dissolution, etc. into consideration, a heat-fusible, water soluble PVA (water-soluble, thermoplastic PVA or merely referred to as PVA) is preferably used. The water-soluble, thermoplastic PVA is of less environmental pollution not only in the extraction treatment because it can be removed by dissolution without using organic solvents but also in the waste disposal because the extracted PVA is biodegradable as mentioned below. When the water-soluble, thermoplastic PVA is used as the component to be removed, the microfine fibers being formed during the removal by dissolution shrink to a greater extent than in the case of using other components to be removed. Therefore, the artificial leather sheet substrate is densified, and the drapeability and feel of the artificial leather sheet substrate and artificial leathers made therefrom become quite similar to those of natural leathers. The content of the component to be removed in the microfine fiber-forming composite fibers is preferably 5 to 70% by mass, more preferably 10 to 60% by mass, and still more preferably 15 to 50% by mass.

The viscosity average degree of polymerization (hereinafter referred to merely degree of polymerization) of the water-soluble, thermoplastic PVA is preferably 200 to 500, more preferably 230 to 470, and still more preferably 250 to 450. If less than 200, the melt viscosity is too low for the stable production of composite fibers. If exceeding 500, the melt viscosity becomes high to make it difficult to extrude polymer from a spinning nozzle. The object of the invention is favorably achieved by the degree of polymerization within the above range. The so-called low polymerization degree PVA having a degree of polymerization of 500 or less has an advantage of being rapidly dissolved in water. The degree of polymerization P of PVA referred to herein is determined according to JIS K-6726 by calculation from the following formula:

$$P = ([\eta] \times 10^3/8.29)^{(1/0.62)}$$

wherein $[\eta]$ is an intrinsic viscosity measured in water at 30°C after re-saponification and purification.

The saponification degree of the water-soluble, thermoplastic PVA is preferably 90 to 99.99 mol%, more preferably 93 to 99.98 mol%, still more preferably 94 to 99.97 mol%, and particularly preferably 96 to 99.96 mol%. If less than 90 mol%, the composite fibers usable in the invention cannot be obtained in some cases, because the heat stability of PVA is lowered and PVA is thermally decomposed and gelated to deteriorate the melt-spinnability, the biodegradability is lowered, and the water-solubility is also lowered although depending on the kinds of comonomer described below. PVA having a saponification degree of higher than 99.99 mol% is difficult to stably produce.

The water-soluble, thermoplastic PVA is biodegradable and degraded into water and carbon dioxide by treating with activated sludge or leaving under the soil. A PVA-containing waste liquid from the step for removing PVA by dissolution is preferably treated by the activated sludge process. The water-soluble, thermoplastic PVA is completely degraded in two days to one month by the continuous treatment of the PVA-containing waste liquid with the activated sludge. Since the water-soluble, thermoplastic PVA has a low heat of combustion and so puts a lighter load on an incinerator, the PVA-containing waste liquid is treated by incineration after drying.

The melting point Tm of the water-soluble, thermoplastic PVA is preferably 160 to 230°C, more preferably 170 to 227°C, still more preferably 175 to 224°C, and particularly preferably 180 to 220°C. If less than 160°C, the crystallizability of PVA is lowered to reduce the tenacity of resulting composite fibers, and simultaneously, PVA cannot be made into fibers in some cases because its heat stability is deteriorated. If higher than 230°C, the melt-spinning temperature increases to approach the decomposition temperature of PVA, failing to produce composite fibers stably.

The water-soluble, thermoplastic PVA is produced by saponifying a polymer mainly comprising vinyl ester units. The vinyl compound monomer for forming the vinyl ester units may be vinyl formate, vinyl acetate, vinyl propionate, vinyl valerate, vinyl caprate, vinyl laurate, vinyl stearate, vinyl benzoate, vinyl pivalate and vinyl versate, with vinyl acetate being preferred because PVA is easily produced.

The water-soluble, thermoplastic PVA is either homopolymer or copolymer modified by introducing copolymerizable units, with the modified PVA being preferred in view of melt-spinnability, water-solubility and fiber properties. The copolymerizable monomer is preferably selected from $\alpha$-olefins having 4 or less carbon atoms such as ethylene, propylene, 1-butene and isobutene; and vinyl ethers such as methyl vinyl ether, ethyl vinyl ether, n-propyl vinyl ether, isopropyl vinyl ether and n-butyl vinyl ether. The content in PVA of the constitutional units derived from the $\alpha$-olefins having 4 or less carbon atom(s) and/or the vinyl ether(s) is preferably 1 to 20 mol%, more preferably 4 to 15 mol%, and still more preferably 6 to 13 mol%. Since the properties of fibers can be enhanced when the $\alpha$-olefin is ethylene, the modified PVA is preferably incorporated with ethylene units in an amount of 4 to 15 mol%, more preferably 6 to 13 mol%.

The water-soluble, thermoplastic PVA is produced by a known polymerization method such as bulk polymerization, solution polymerization, suspension polymerization and emulsion polymerization. The bulk polymerization in the absence of solvent and the solution polymerization in a solvent such as alcohol are commonly employed. A lower alcohol such as methyl alcohol, ethyl alcohol and propyl alcohol is used as the solvent for the solution polymerization. Known azo initiators or peroxide initiators such as a,a'-azobisisobutyronitrile, 2,2'-azobis(2,4-dimethylvaleronitrile), benzoyl peroxide and n-propyl peroxycarbonate may be used in the copolymerization. The polymerization temperature is preferably 0 to 150°C, although not particularly limited thereto.

(ii) Step of Forming United Laminate Structure of Web and Knitted or Woven Fabric by Entanglement

Then, the web and a reinforcing knitted or woven fabric produced as mentioned below are superposed and the resultant superposed fabrics are subjected to entangling treatment by a needle punching and/or a high-pressure stream of water, thereby making the web into a nonwoven fabric and bonding the web and the knitted or woven fabric into a united laminate structure.

In the invention, conventionally used knitted or woven fabrics made of hard twist fibers are not suitable, and preferably usable is a knitted or woven fabric made of raw fibers having a twist number of 10 to 650 twists/m and being capable of forming microfine fibers with random and slight crimps in the subsequent step of removal by dissolution (step of forming microfine fibers). By using such a knitted or woven fabric, the united laminate structure in which the nonwoven fabric layer A and the knitted or woven fabric layer Bare strongly entangled is produced.

Like the raw fibers for the web mentioned above, the raw fibers for the knitted or woven fabric are preferably microfine fiber-forming composite fibers having a cross section such as sea-island structure and multi-layered structure. The polymers for constituting the fiber component (microfine fibers constituting the knitted or woven fabric layer B) are as described above. The component to be removed is constituted by one or more solvent-removable polymers such as polystyrene and its copolymers, polyethylene, PVA, copolyesters and copolyamides. For the same reason as mentioned above with respect to the raw fibers for the web, the water-soluble, thermoplastic PVA is preferably used. Particularly preferred composite fibers for forming the knitted or woven fabric are microfine fiber-forming composite fibers comprising a combination of a polymer exhibiting excellent shrink properties (shrink stress, degree of shrinkage) during dissolution into water, preferably the water-soluble, thermoplastic PVA, and a water-insoluble, fiber-forming polymer such as PET, PTT, PBT, PLLA, nylon 6 and nylon 66, because the densification of the artificial leather sheet substrate by the extraction treatment and the improvement in feel can be effectively attained. In view of productivity, it is preferred to use the same or analogous polymers as the components to be removed for both the composite fibers forming the knitted or woven fabric and the composite fibers forming the web, because the extraction treatment can be done in a single operation for both the web and the knitted or woven fabric. By using different polymers or polymers which are analogous but removed under different dissolution conditions, the web and the knitted or woven fabric can be subjected to the extraction treatment separately even after made into a united laminate structure, this making it possible to provide the nonwoven fabric layer A and the knitted or woven fabric layer B having different adhesion properties to the elastic polymer.

The single fiber fineness of the composite fibers forming the knitted or woven fabric is 8 dtex or less, preferably 1 dtex or more.

The cross section of the microfine fiber-forming composite fibers may be a sea-island structure comprising the PVA as the sea component and the water-insoluble polymer as the island component, a multi-layered structure comprising a plurality of laminated layers of the PVA and the water-insoluble polymer, a sheath-core structure, and a combination thereof. At present, it is not necessarily clear why the high-density knitted or woven fabric layer B is obtained by the use of composite filaments containing the PVA as the component to be removed. The density tends to become high with increasing PVA content in the composite fibers. Therefore, as mentioned above, the knitted or woven fabric may be densified by strong shrink stress which is generated during the removal of PVA by dissolution into water. The content of PVA in the microfine fiber-forming composite fibers is preferably 5 to 70% by mass, more preferably 10 to 60% by mass, and still more preferably 15 to 50% by mass.

The microfine fiber-forming composite fibers have a single fiber fineness preferably in the range of 1 to 8 dtex, and are preferably in the form of filaments because of easiness of fiber-forming. Therefore, the fibers for forming the knitted or woven fabric are preferably multifilaments composed of 10 to 200 microfine fiber-forming composite filaments. The fineness of the multifilaments is preferably 50 to 150 dtex.

The microfine fiber-forming composite fibers may be twisted by shrinkage treatment to have a number of twist of preferably 10 to 650 twists/m, more preferably 10 to 500 twists/m. If exceeding 650 twists/m, it becomes difficult to produce the united laminate structure in which the nonwoven fabric layer A and the knitted or woven fabric layer B are strongly entangled. If less than 10 twists/m, the process passing properties are deteriorated in weaving step or knitting step. The number of twist of the microfine fiber-forming composite fibers is substantially retained after made into microfine fibers.

The mass per unit area of the knitted or woven fabric depends on the end use applications, and preferably selected so as to be changed into a knitted or woven fabric layer B having a mass per unit area of preferably 20 to 200 g/m$^2$, more preferably 30 to 150 g/m$^2$ by the microfine fiber-forming treatment. A knitted or woven fabric to be changed into a knitted or woven fabric layer B having a mass per unit area of less than 20 g/m$^2$ is in a significantly loose structure and lacking in stability to cause shift of stitches. A knitted or woven fabric to be changed into a knitted or woven fabric layer B having a mass per unit area of exceeding 200 g/m$^2$ has an excessively dense texture to prevent the sufficient penetration of the fibers constituting the nonwoven fabric, thereby failing to entangle the nonwoven fabric and the knitted or woven fabric sufficiently to make it difficult to produce the strongly bonded, united laminate structure. The weave structure and knit structure of the knitted or woven fabric may be warp stitch such as plain stitch, weft stitch such as tricot stitch lace stitch, various stitches based on preceding stitches, plain weave, twill weave, satin weave, and various weaves based on preceding weaves, although not limited thereto. Preferred are woven fabrics made of warps and wefts each having a number of twist of 10 to 650 twists/m, and more preferred are woven fabrics made of warps and wefts each having a number of twist of 10 to 500 twists/m.

The knitted or woven fabric and the web are superposed and the superposed fabrics are entangled into a united laminate structure by a needle punching or a high-pressure stream of water, preferably by a needle punching. In the invention, the laminate may be a two-layered laminate of knitted or woven fabric/web or a three-layered laminate of web/knitted or woven fabric/web.

The needle punching is performed under the conditions allowing the fibers constituting the knitted or woven fabric to penetrate into the web and reach the outer surface of the web so as to finally provide a surface exposure of the fibers constituting the knitted or woven fabric layer B on the outer surface of the nonwoven fabric layer A within the range described below. In the conventional production of artificial leathers, the needle punching has been conducted under the conditions so as to prevent the fibers constituting the knitted or woven fabric from being exposed on the surface of nonwoven fabric. The important difference between the invention and conventional technique resides in that the needle punching is performed in the invention under the conditions positively allowing such an exposure. With the needle punching allowing such an exposure, the mechanical properties of the resultant laminate are improved and the subsequent shrinking treatment can be conducted without causing any problems. Specifically, the needle punching is conducted under the conditions so as to allow the barbs of needles to reach the surface of web at a needle punching density of preferably 400 to 5000 punches/cm$^2$, more preferably 1000 to 2000 punches/cm$^2$. The needle punching is preferably conducted from both the sides of the laminate of the web and the knitted or woven fabric in view of obtaining a natural leather-like appearance. Namely, it is preferred to allow the fibers constituting the knitted or woven fabric layer B to be exposed to the outer surface of the nonwoven fabric layer A, and simultaneously, allow the fibers constituting the nonwoven fabric layer A to be exposed to the outer surface of the knitted or woven fabric layer B.

(iii) Step of Shrinking Treatment

The united laminate structure of the nonwoven fabric and the knitted or woven fabric thus produced is then subjected to a shrinking treatment, preferably a dry heat shrinking treatment. By the shrinking treatment, the surface area of the united laminate structure is reduced to 40 to 90% of the surface area before shrinking treatment to make the united laminate structure more densified. A small shrink resulting in a reduced surface area of larger than 90% of the surface area before shrinking treatment fails to provide a densified feel and to deteriorate the feel. A large shrink resulting in a reduced surface area of less than 40% of the surface area before shrinking treatment provide a hard feel.
The shrinking treatment is carried out by allowing the united laminate structure to stand in an atmosphere of 160 to 190°C for 0.5 to 3 min.

(iv) Step of Impregnating Elastic Polymer

The shrunk united laminate structure is then impregnated with the elastic polymer C.
After impregnated in the form of a solution, emulsion (water dispersion), etc., the elastic polymer is coagulated. If necessary, the elastic polymer may be coated on the surface of the united laminate structure during the impregnation or after impregnation to form a grain-finished layer. The impregnating amount of the elastic polymer is preferably 5 to 45% by mass of the resultant artificial leather sheet substrate (total of nonwoven fabric layer A, knitted or woven fabric layer B and elastic polymer C).
The elastic polymer is impregnated into the united laminate structure by a known method such as a dip and nip method. If the united laminate structure is made of composite fibers comprising the water-soluble, thermoplastic PVA and the crystalline thermoplastic polymer having a melting point of 160°C or higher, the water-soluble, thermoplastic PVA may be squeezed out during the nip treatment to contaminate the elastic polymer solution/dispersion. Therefore, it is preferred to impregnate the elastic polymer by a method capable of impregnating a desired amount of elastic polymer by controlling only the supply amount and the concentration without applying a large pressure to the elastic polymer solution/dispersion, while controlling the permeability of the elastic polymer solution/dispersion into the united laminate structure and the impregnating pressure.
By the above impregnating method, the elastic polymer solution/dispersion can be impregnated into the inside of the united laminate structure uniformly in a short time without using a complicated process and increasing the impregnating pressure. The permeability is expressed by the permeation time taken until the elastic polymer solution/dispersion completely impregnates into the united laminate structure, and preferably 10 s or less, more preferably 5 s or less, and still more preferably 2 s or less. If exceeding 10 s, the elastic polymer solution/dispersion supplied onto the surface of united laminate structure does not completely impregnate into the inside uniformly and runs from the supplied surface to contaminate the vicinity of the device for supplying the solution/dispersion and to cause a deficiency in the impregnated amount inside the united laminate structure.
The permeation time referred to herein is the time taken until 0.035 cc of the elastic polymer solution/dispersion completely permeates into the united laminate structure after the solution/dispersion is dropped onto it surface from a height of 10 cm, and regulated by the relationship between the viscosity, concentration, etc. of the elastic polymer solution/dispersion and the density, etc. of the united laminate structure. The complete permeation means the disappearance of swelling state of the elastic polymer solution/dispersion on the surface of united laminate structure, which is confirmed under visual observation. The permeation time is regulated within the above range by controlling the viscosity and the concentration of the elastic polymer solution/dispersion. When the density of the united laminate structure is 0.40 to 0.90 g/m$^3$, the viscosity of the elastic polymer solution/dispersion is preferably 2 to 80 cP and the concentration is preferably 30 to 60% by mass because the permeation time is easily regulated within 10 s or less.

The concentration of the elastic polymer solution/dispersion is more preferably 35 to 50% by mass. If less than 30% by mass, the migration is likely to occur in the drying step. If exceeding 60% by mass, the permeation time tends to become long and the amount of impregnated elastic polymer tends to reduce. The viscosity of the elastic polymer solution/dispersion is more preferably 5 to 60 cP, and still more preferably 10 to 50 cP.

If the permeation time exceeds 10 s even when the density of the united laminate structure and the viscosity and concentration of the elastic polymer solution/dispersion are within the above ranges, it is preferred to enhance the permeability by adding a surfactant to the elastic polymer solution/dispersion so as to regulate the permeation time within 10 s or less. The surfactant may be selected from known wetting agents, penetrating agents and leveling agents.

In addition to regulate the permeability of the elastic polymer solution/dispersion into the united laminate structure within the above range, it is preferred to control the impregnating pressure. To impregnate the elastic polymer into the inside of the united laminate structure more uniformly, the impregnating pressure is preferably 1,000 to 100,000 Pa, more preferably 2,000 to 80,000 Pa, and still more preferably 2,000 to 50,000 Pa, although depending on the density and mass per unit area of the united laminate structure. If less than 1,000 Pa, the elastic polymer solution/ dispersion does not sufficiently permeate from the supplied surface into the opposite surface to lessen the feel of resultant artificial leather sheet substrates. If higher than 100,000 Pa, although the permeability is good, the elastic polymer solution/dispersion runs from the supplied surface to contaminate the surroundings and reduce the workability. When the impregnating pressure is in the above range, the use of a united laminate structure allowing the elastic polymer solution/dispersion to have a permeability of 10 s or less is preferred, and the use of a united laminate structure having a density of 0.40 to 0.90 g/cm$^3$ and a mass per unit area of 600 to 1500 g/m$^2$ is more preferred. Any known impregnation apparatuses can be used so long as the above conditions are satisfied, with a lip coater being particularly preferred. The lip coater has a reservoir chamber defined by inlet and outlet edges of an impregnation zone and side walls disposed at both the lateral sides of the united laminate structure being treated along its moving direction. In the reservoir chamber, a measured amount of elastic polymer solution/dispersion is supplied onto the surface of united laminate structure from a slit nozzle by using a pump and then allowed to permeate into the inside of united laminate structure under pressure.

The impregnating pressure of elastic polymer solution/dispersion referred to herein is a pressure of atmosphere surrounding the united laminate structure in the reservoir chamber, and measured by a liquid pressure gage disposed in the reservoir chamber. The types of liquid pressure gage are not specifically limited.

Any types of elastic polymers that have been conventionally used as impregnants for artificial leather sheets may be used as the elastic polymer C. Examples thereof include rubbery elastic polymers such as urethane polymers, acrylic polymers, SBR, NBR and polyamino acid, with the urethane polymers and acrylic polymers being preferred. By dispersing in a solvent such as water which does not dissolve the elastic polymer C, an elastic polymer dispersion is obtained. An elastic polymer solution is obtained by dissolving the elastic polymer C in a solvent such as dimethylformamide, N-methylpyrrolidone, methyl ethyl ketone, toluene and alcohols such as methanol, ethanol and isopropyl alcohol. The solution/dispersion may be added with colorant such as organic pigment and inorganic pigment, penetrant, thickening agent, antioxidant, ultraviolet absorber, film-forming aid, heat-sensitive gelatinizer, softener, lubricant, stainproofing agent, fluorescent agent, fungicide, or flame retardant, in an amount not adversely affecting the effect of the invention. The organic pigments may include phthalocyanine pigments, anthraquinone pigments, quinacridone pigments, dioxazine pigments, perylene pigments, thioindigo pigments, azo pigments, etc. The inorganic pigments may include titanium oxide, silica, carbon black, red oxide, chrome red, molybdenum red, litharge, iron oxide, etc.

After impregnation of the elastic polymer solution/dispersion, the elastic polymer is coagulated by heating. The coagulation may be conducted by any known methods, preferably by a dry coagulation under heating or a heat coagulation by a hot water treatment or a steam treatment. More preferably, the elastic polymer can be coagulated uniformly throughout the united laminate structure by a wet coagulation of an elastic polymer solution or a heat coagulation of an elastic polymer dispersion added with a heat-sensitive gelling compound.

(v) Step of Making Microfine Fibers

If the nonwoven fabric or the knitted or woven fabric is made of the microfine fiber-forming composite fibers, the treatment for forming microfine fibers is then conducted. As described above, the sea component of the microfine fiber-forming composite fibers is preferably made of the water-soluble, thermoplastic PVA. When the sea component is such a PVA, the composite fibers are converted into microfine fibers by repeating the immersion in water and the subsequent squeezing several times. The temperature of water is preferably 70 to 120°C. In the invention, the step of forming microfine fibers may be carried out before the impregnation of the elastic polymer. However, the step of forming microfine fibers is preferably carried out after the impregnation of the elastic polymer in view of obtaining a good flexibility. When the sea component is the PVA, the nonwoven fabric and the knitted or woven fabric further shrink during the removal of PVA by water to make them more densified.

By the step of forming microfine fibers, the microfine fiber-forming composite fibers constituting the nonwoven fabric are converted into bundles of microfine fibers having a single fiber fineness of 0.0003 to 0.4 dtex, thereby forming the nonwoven fabric layer A. The microfine fiber-forming composite fibers constituting the knitted or woven fabric are converted into microfine fibers having a single fiber fineness of 0.0003 to 3.5 dtex and having random slight crimps caused by a large shrink of the water-soluble, thermoplastic PVA, thereby forming the knitted or woven fabric layer B.

The overall thickness of the artificial leather sheet substrate thus produced is preferably 0.3 to 3 mm, more preferably 0.4 to 1.3 mm. The thickness of the nonwoven fabric layer A is preferably 0.1 to 2.5 mm, more preferably 0.2 to 1.0 mm. The thickness of the knitted or woven fabric layer B is preferably 0.1 to 0.5 mm, more preferably 0.1 to 0.3 mm. The thickness ratio, nonwoven fabric layer A/knitted or woven fabric layer B, is preferably 5/5 to 9/1, preferably 7/3 to 9/1 in view of satisfying both the feel and the mechanical properties of the resultant artificial leather sheet substrates.

The mass per unit area (exclusive of the elastic polymer C) is preferably 200 to 500 $g/m^2$ for the nonwoven fabric layer A, and preferably 20 to 200 $g/m^2$ for the knitted or woven fabric layer B, in view of the practical utility and quality of appearance of the artificial leathers. The ratio of the knitted or woven fabric layer B to the nonwoven fabric layer A is preferably 50% by mass or less, more preferably 10 to 50% by mass. If exceeding 50% by mass, the appearance and aesthetical appeal are impaired. If less than 10% by mass, the mechanical properties such as tear strength are deteriorated.

The density of the artificial leather sheet substrate of the invention is preferably 0.50 to 0.85 $g/cm^3$, more preferably 0.53 to 0.80 $g/cm^3$. If less than 0.50 $g/cm^3$, the mechanical properties such as tear strength are deteriorated. If larger than 0.85 $g/cm^3$, the flexibility becomes poor to lessen the feel. The density of conventionally known artificial leathers is within the range of 0.3 to 0.45 $g/cm^3$. Thus, as compared with known artificial leathers, the artificial leather sheet substrates of the invention have an extremely high density. With such a high density, the artificial leather sheet substrates of the invention exhibit the feel, densified feel and drapeability closely similar to those of natural leathers and have excellent mechanical properties.

It is important for the artificial leather sheet substrates of the invention that the surface exposure of the microfine fibers constituting the knitted or woven fabric layer B on the outer surface of the nonwoven fabric layer A, i.e., on the surface of the nonwoven fabric layer A opposing its surface bonded to the knitted or woven fabric layer B, is 0.3 to 20%.

A surface exposure less than 0.3% reduces the mechanical properties such as tear strength, and a surface exposure more than 20% impairs the appearance. The surface exposure is preferably 0.5 to 15%, more preferably 0.8 to 10%. If within the above range, the artificial leather sheet substrates of the invention acquire the tear strength, feel and densified feel which are closely similar to those of natural leathers.

The surface exposure was determined as follows.

(1) United laminate structure before converting composite fibers into microfine fibers and impregnating elastic polymer

A united laminate structure was embedded in paraffin (mp: 68 to 70°C) on a hot plate (for example, "NHP-1" available from Iuchi Co., Ltd.) at about 80°C under reduce pressure achieved by aspirator. The surface was cut away in about 100 µm depth with a microtome (for example, "HM360" available from Microm Co., Ltd.) to prepare a measuring surface.

(2) Artificial leather sheet substrate

After embedding an artificial leather sheet substrate in paraffin in the same manner as in the method 1, the surface was cut away in about 50 µm depth with a microtome to prepare a measuring surface.

(3) Suede-finished artificial leather

After embedding a suede-finished artificial leather in paraffin in the same manner as in the method 2, the surface was cut away in a depth of less than 50 µm with a microtome to prepare a measuring surface. Alternatively, the suede-finished surface was measured without any treatment.

(4) The measuring surface prepared in any one of methods 1 to 3 was magnified 100 times with an optical microscope (for example, "SMZ 1000" available from Nikon Corporation), and then further magnified two times for photographing.

(5) The photograph was image-analyzed by a personal computer to measure the total cross-sectional area P of the fibers constituting the knitted or woven fabric layer present on the surface of the nonwoven fabric layer A and the total cross-sectional area Q of the fibers constituting the nonwoven fabric layer (measured area: 1 cm x 1 cm on photograph). The fibers of knitted or woven fabric layer and the fibers of nonwoven fabric layer which were not present cross-sectionally but lay down in the photograph were omitted from the measurement of P and Q.

(6) The surface exposure was calculated from the following formula:

$$\text{Surface exposure (\%)} = 100 \times P/(P + Q).$$

The accurate measurements of P and Q are somewhat difficult by the methods described above in some cases. The measured P and Q sometimes do not correctly reflect the actual cross-sectional areas when the fibers of the knitted or woven fabric layer B and the fibers of the nonwoven fabric layer A are difficult to be distinguished from each other by the observation on the surface of specimens, when the bundles of microfine fibers forming the knitted or woven fabric layer B and the nonwoven fabric layer A are compressed during the embedding in paraffin, or when the paraffin is exfoliated in the microtome cutting because of a poor adhesion of paraffin to the fibers forming the knitted or woven fabric layer B and the nonwoven fabric layer A. In such cases, the exposure of the microfine fibers of the knitted or woven fabric layer B may be observed on the cross section taken along the depth direction of the specimen. Since the substantially actual surface exposure can be calculated from the results of the cross-sectional observation on the exposure of the microfine fibers of the knitted or woven fabric on the surface of specimens, this method can be suitably employed according to the conditions of specimen.

The MD/CD average tear strength per a mass per unit area of 100 $g/m^2$ of the artificial leather sheet substrates of the invention is high as compared with conventionally known artificial leathers, and preferably 0.75 to 1.75 kg/(100 $g/m^2$), and more preferably 0.90 to 1.75 kg/(100 $g/m^2$), wherein MD is the machine direction and CD is the cross-wise direction. Such a high MD/CD average tear strength is attributable to the united laminate structure and densified structure of the artificial leather sheet substrates. The MD/CD average tear strength is an averaged value of the tear strengths in the machine direction and the cross-wise direction measured by the method described below.

The artificial leather sheet substrates of the invention can be made into artificial leathers of different appearance such as suede appearance having relatively long napped surface and nubuck appearance having short napped surface by buffing the surface of the nonwoven fabric layer A with sand paper, card clothing, etc. The artificial leathers thus obtained exhibit an extremely high abrasion resistance and cause substantially no pull-out of napped fibers, because the nonwoven fabric and the knitted or woven fabric are strongly entangles by needle punching.

The artificial leather sheet substrates of the invention can be made into grain- or semi grain-finished artificial leathers by applying a polymer of various types on the surface, melting the surface under heating or dissolving the surface by a solvent to make the surface flat and smooth. The grain- or semi grain-finished artificial leathers may be colored by dyeing, embossed on their surface to form suitable relief surface pattern, or made flexible by crumpling.

As described above, according to the invention, a high-density united laminate structure in which a nonwoven fabric and a knitted or woven fabric are strongly entangled is produced, thereby providing an artificial leather sheet substrate having a high tenacity, a high density, a high tear strength, a high flexibility and a high quality which are not attained in the conventional techniques.

As compared with conventional sheet substrates which are produced by entangling a knitted or woven fabric and a nonwoven fabric by a high-pressure stream of water so as to allow the microfine staples having a fiber length of less than 20 mm forming the nonwoven fabric to enter into intervening spaces between single fibers in the knitted or woven fabric-forming fibers, the artificial leather sheet substrates of the invention are excellent in flexibility and quality and strongly bonded into a united laminate structure, and therefore, have great commercial values.

The artificial leather sheet substrates of the invention are processed into various artificial leather articles such as shoes, balls, furniture, seats for vehicles, clothes, gloves, baseball gloves, bags, belts and supporters. In particular, the suede-finished or nubuck-finished artificial leather sheets obtained from the artificial leather sheet substrates of the invention are excellent in color development and color fastness to light and rubbing.

The present invention will be explained in more detail by reference to the following examples which should not be construed to limit the scope of the present invention. In the following examples and comparative examples, "part (s)" and "%" are based on mass unless otherwise specified.

(1) Evaluation of spinnability

Evaluated by the frequency of fiber breaks occurred during the production of 100 kg of fibers, and shown by the following ratings.

    A: 3 times/100 kg or less
    B: 4 to 7 times/100 kg
    C: 8 times/100 kg or more

(2) Tear strength

Measured according to the method C of JIS L-1079 5.14 on specimens taken out along the machine direction (MD) and the cross-wise direction (CD).

(3) Feel and aesthetic appeal of artificial leather sheet substrate

Evaluated by 10 persons engaged in development of artificial leathers according to the following ratings. The results were shown by the most frequent rating.

A: Having very soft feel like natural leathers and excellent aesthetic appeal.
B: Having soft feel like natural leathers and good aesthetic appeal.
C: Having somewhat hard feel and lessened in aesthetic appeal.
D: Having hard rubbery feel and poor in aesthetic appeal.

(4) Density of artificial leather sheet substrate

The mass (W g) of 10 cm x 10 cm artificial leather sheet substrate was measured by an electronic balance ("AE160" available from Mettler Inc.), and the mass W was divided by the volume of the specimen.

(5) Color fastness to light

The surface of artificial leather sheet substrate was irradiated with light from a xenon arc lamp for 100 h at a black panel temperature of 83°C and a integrated intensity of irradiation of 20 MJ without spraying water. The degree of color change was determined by the grade of gray scale for assessing change in color. The rating of color fastness was indicated by the grade number of the gray scale.

EXAMPLE 1

Production of water-soluble, thermoplastic vinyl alcohol-based polymer

A 100-L pressure reactor equipped with a stirrer, a nitrogen inlet, an ethylene inlet and an initiator inlet was charged with 29.0 kg of vinyl acetate and 31.0 kg of methanol. After raising the temperature to 60°C, the reaction system was purged with nitrogen by bubbling nitrogen for 30 min. Then, ethylene was introduced so as to adjust the pressure of the reactor to 5.9 kg/cm$^2$. A 2.8 g/L methanol solution of 2,2'-azobis(4-methoxy-2,4-dimethylvaleronitrile) (AMV, polymerization initiator) was purged with nitrogen by nitrogen gas bubbling. After adjusting the temperature of reactor to 60°C, 170 ml of the initiator solution was added to initiate the polymerization. During the polymerization, the pressure of reactor was maintained at 5.9 kg/cm$^2$ by introducing ethylene, the polymerization temperature was maintained at 60°C, and the initiator solution was continuously added at a rate of 610 ml/h. When the conversion of polymerization reached 70% after 10 h, the polymerization was terminated by cooling. After releasing ethylene from the reactor, ethylene was completely remove by bubbling nitrogen gas. The non-reacted vinyl acetate monomer was removed under reduced pressure to obtain a methanol solution of polyvinyl acetate which was then diluted to 50% concentration with methanol. The polyvinyl acetate was saponified by adding 46.5 g an alkali solution (10% methanol solution of NaOH) to 200 g of the 50% methanol solution of polyvinyl acetate (NaOH/vinyl acetate unit = 0.10/1 by mole). After about 2 min of the addition of the alkali solution, the system was gelated. The gel was crushed by a crusher and allowed to stand at 60°C for one hour to further proceed the saponification. Then, 1000 g of methyl acetate was added to neutralize the alkali. After confirming the completion of neutralization by phenolphthalein indicator, the white solid PVA obtained by filtration was added with 1000 g of methanol and allowed to stand at room temperature for 3 h for washing. After repeating the above washing operation three times, the liquid was centrifugally removed and the resultant solid was dried at 70°C for 2 days to obtain a dry ethylene-modified PVA. The saponification degree of the ethylene-modified PVA was 98.4 mol%. The modified PVA was incinerated and dissolved in an acid for analysis by atomic-absorption spectroscopy. The content of sodium was 0.03 part by mass based on 100 parts by mass of the modified PVA.

After repeating the reprecipitation operation comprising the addition of the methanol solution of polyvinyl acetate after removing the non-reacted vinyl acetate monomer to n-hexane to cause precipitation and the subsequent dissolution of the precipitate in acetone three times, the precipitate was vacuum-dried at 80°C for 3 days to obtain a purified polyvinyl acetate. The polyvinyl acetate was dissolved in d6-DMSO and analyzed by 500 MHz H-NMR (JEOL GX-500) at 80°C. The content of ethylene was 10 mol%. The methanol solution of polyvinyl acetate was added with an alkali solution (alkali/vinyl acetate unit = 0.5/1 by mole) and allowed to stand at 60°C for 5 h after crushing the gel to proceed the saponification. The resultant solution was subjected to Soxhlet extraction with methanol for 3 days and the obtained solid was vacuum-dried at 80°C for 3 days to obtain a purified ethylene-modified PVA.. The average polymerization degree of the purified PVA was 330 when measured by a common method of JIS K-6726. The content of 1,2-glycol linkage and the content of three consecutive hydroxyl groups were respectively 1.50 mol% and 83 mol% when measured by 500 MHz H-NMR in the same manner as above. A 5% aqueous solution of the purified, modified PVA was made into a cast film of 10 μm thick which was then vacuum-dried at 80°C for one day and then subjected to DSC analysis using "TA 3000" available from Mettler Inc. in the manner described above. The melting point was 206°C.

By changing the type and content of copolymerizable component, the polymerization degree, the saponification degree, etc., different types of PVA were produced. The results are shown in Table 1.

Table 1

|  | Polymerization degree | Saponification degree (mol%) | Tm (°C) | Modifier | Content of modifier (mol%) |
|---|---|---|---|---|---|
| P1 | 330 | 98.4 | 206 | ethylene | 10 |
| P2 | 230 | 98.9 | 205 | ethylene | 13 |
| P3 | 330 | 98.4 | 208 | ethyl vinyl ether | 8 |

Production of web

The PVA (sea component) produced above and PET (island component) were spun at 250°C from a spinneret for melt composite spinning (0.25 mmϕ, 550 holes) capable of forming 37 island segments. The used PET had an intrinsic viscosity of 0.65 when measured at 30°C in a phenol/tetrachloroethane mixed solvent (1/1 by mass), a melting point of 234°C and the isophthalic acid content of 10 mol%. The spun fibers were drawn by roller plate under common conditions. The spinnability, continuous running, drawability were good and no problem was caused. The resultant sea-island composite fibers were crimped by a crimping machine and cut into staples of 51 mm long. The detail of the sea-island composite staples are shown in Table 2. The staples were made into a web with a mass per unit area of 500 g/m$^2$ by cross lapping.

Production of knitted or woven fabric

The PVA (sea component) produced above and the PET (island component) used above were spun at 250°C from a spinneret for melt composite spinning (0.25 mmϕ, 24 holes) capable of forming 37 island segments (sea component island component = 4:6 by mass). The spun fibers were drawn by roller plate under common conditions to obtain sea-island composite multifilaments of 84 dtex composed of 24 filaments. The spinnability, continuous running, drawability were good and no problem was caused. The multifilaments were twisted to have a number of twist of 550 twists/m and made into a plain woven fabric (weave density: 105 x 84/inch, mass per unit area: 120 g/m$^2$).

Production of artificial leather sheet substrate

The web and the plain woven fabric were superposed and entangled by needle punching under a density of 1500 punches/cm$^2$. The needle punched fabrics were then subjected to a dry heat treatment at 150°C so as to be shrunk by 30% in terms of area to reduce the area to 70% of the area before shrinking, thereby obtaining a united laminate structure having a flat and smooth surface. The united laminate structure was impregnated with a 13% dimethylformamide solution of a polyether polyurethane and then immersed in a dimethylformamide/water mixed solution to wet-coagulate the polyether polyurethane. Then, the sea and sheath component PVA was removed by dissolution in a water bath at 90°C to obtain an artificial leather sheet substrate. The sheet shrunk during the PVA removal to have a surface which was 80% the surface before the PVA removal treatment. The impregnated amount of the elastic polymer was 21% by mass and the thickness of the sheet was 0.8 mm.

Production of suede-finished artificial leather

The artificial leather sheet substrate was made into a suede-finished artificial leather having a fine napped surface by buffing the surface of its nonwoven fabric layer A with a sand paper.

EXAMPLES 2-3

The procedure of Example 1 was repeated except for forming the web from the sea-island composite fibers shown in Table 2.

EXAMPLES 4-5

The procedure of Example 1 was repeated except for forming the knitted or woven fabric from multifilaments composed of sea-island composite filaments having one island segment or 60 island segments to change the single fiber finenesses of microfine filaments.

EXAMPLES 6-9

The procedure of Example 1 was repeated except for changing the sea component polymer or the island component polymer as shown in Table 2 and changing the needle punching density to 2500 punches/cm$^2$ for Example 6.

EXAMPLE 10

The procedure of Example 1 was repeated except for changing the elastic polymer C to the polyether/polycarbonate polyurethane.

COMPARATIVE EXAMPLE 1

The procedure of Example 1 was repeated except for forming the web from the sea-island composite fibers of 5.0 dtex having 5 island segments.

COMPARATIVE EXAMPLES 2-3

The web was tried to be formed in the same manner as in Example 1 except for using sea-island composite fibers having the fiber length shown in Table 2. However, the composite fibers could not be made into web because of poor card passing properties, failing to evaluate an artificial leather sheet substrate.

COMPARATIVE EXAMPLE 4

The procedure of Example 1 was repeated except for forming the knitted or woven fabric from single-component spun fibers made of isophthalic acid-modified PET.

COMPARATIVE EXAMPLE 5

The procedure of Comparative Example 4 was repeated except for forming the knitted or woven fabric from hard twist multifilaments of 1500 twists/m.

COMPARATIVE EXAMPLE 6

The procedure of Comparative Example 5 was repeated except for changing the sea component of the web-forming fibers from PVA to PET modified with 5 mol% of sodium sulfoisophthalate (SIP) and using an aqueous sodium hydroxide bath of 90°C in place of the water bath.

COMPARATIVE EXAMPLE 7

The procedure of Comparative Example 5 was repeated except for changing the sea component of the web-forming fiber from PVA to a low density polyethylene and using a toluene bath of 90°C in place of the water bath.
The details of the raw fibers and elastic polymer used in the examples and comparative examples are shown in Table 2, and the properties of the artificial leather sheet substrates are shown in Table 3.

Table 2

| | Nonwoven Fabric Layer A | | | | | | | |
|---|---|---|---|---|---|---|---|---|
| | microfine fiber-forming composite fibers | | | | | | microfine fibers | |
| | Sea component | Island component | Single fiber fineness (dtex) | Sea/Island ratio | Number of island segment | Spinnability | Single fiber fineness (dtex) | Fiber length (mm) |
| Examples | | | | | | | | |
| 1 | P1 | PET1* | 3.0 | 40/60 | 37 | A | 0.054 | 45.0 |
| 2 | P1 | PET1* | 3.0 | 40/60 | 600 | A | 0.003 | 45.0 |
| 3 | P1 | PET1* | 3.2 | 30/70 | 12 | A | 0.176 | 45.0 |
| 4 | P1 | PET1* | 3.0 | 40/60 | 37 | A | 0.054 | 45.0 |
| 5 | P1 | PET1* | 3.1 | 40/60 | 37 | A | 0.055 | 45.0 |
| 6 | P2 | PET1* | 3.1 | 40/60 | 37 | A | 0.055 | 45.0 |
| 7 | P3 | PET1* | 3.1 | 40/60 | 37 | A | 0.055 | 45.0 |
| 8 | P1 | Ny6* | 3.5 | 40/60 | 37 | A | 0.062 | 45.0 |
| 9 | P1 | PLLA* | 3.3 | 40/60 | 37 | A | 0.059 | 45.0 |
| 10 | P1 | PET1* | 3.0 | 40/60 | 37 | A | 0.054 | 45.0 |
| Comparative Examples | | | | | | | | |
| 1 | P1 | PET1* | 5.0 | 40/60 | 5 | A | 0.670 | 45.0 |
| 2 | P1 | PET1* | 3.0 | 40/60 | 37 | A | 0.054 | 9 |
| 3 | P1 | PET1* | 3.0 | 40/60 | 37 | A | 0.054 | 135 |
| 4 | P1 | PET1* | 3.0 | 40/60 | 37 | A | 0.054 | 45.0 |
| 5 | P1 | PET1* | 3.0 | 40/60 | 37 | A | 0.054 | 45.0 |
| 6 | PET2* | PET1* | 3.1 | 40/60 | 37 | A | 0.055 | 45.0 |
| 7 | LDPE* | PET1* | 3.1 | 40/60 | 37 | A | 0.056 | 45.0 |

PET1*: isophthalic acid-modified PET

Ny6*: nylon 6

PLLA*: polylactic acid

PET2*: sodium sulfoisophthalate-modified PET

LDPE*: low density polyethylene

Table 2 (contd.)

| | Knitted or Woven Fabric B | | | | | Elastic Polymer C |
| | microfine fiber-forming composite fibers | | | microfine fibers | | |
| | Sea component | Island component | Twist (twists/m) | Single fiber fineness (dtex) | Slight crimp | |
|---|---|---|---|---|---|---|
| **Examples** | | | | | | |
| 1 | P1 | PET1* | 500 | 0.057 | yes | PU1* |
| 2 | P1 | PET1* | 500 | 0.057 | yes | PU1* |
| 3 | P1 | PET1* | 500 | 0.057 | yes | PU1* |
| 4 | P1 | PET1* | 500 | 0.003 | yes | PU1* |
| 5 | P1 | PET1* | 500 | 1.8 | yes | PU1* |
| 6 | P2 | PET1* | 500 | 0.057 | yes | PU1* |
| 7 | P3 | PET1* | 500 | 0.057 | yes | PU1* |
| 8 | P1 | Ny6* | 500 | 0.057 | yes | PU1* |
| 9 | P1 | PLLA* | 500 | 0.057 | yes | PU1* |
| 10 | P1 | PET1* | 500 | 0.057 | yes | PU2* |
| **Comparative Examples** | | | | | | |
| 1 | P1 | PET1* | 500 | 0.057 | yes | PU1* |
| 2 | P1 | PET1* | 500 | 0.057 | yes | PU1* |
| 3 | P1 | PET1* | 500 | 0.057 | yes | PU1* |
| 4 | – | PET1* | 500 | 5 | substantially none | PU1* |
| 5 | – | PET1* | 1500 | 5 | substantially none | PU1* |
| 6 | – | PET1* | 1500 | 5 | substantially none | PU1* |
| 7 | – | PET1* | 1500 | 5 | substantially none | PU1* |

PET1*: isophthalic acid-modified PET

Ny6*: nylon 6

PLLA*: polylactic acid

PU1*: polyether polyurethane

PU2*: polyether/polycarbonate polyurethane

A polyurethane solution was applied onto the surface of the nonwoven fabric layer A of each artificial leather sheet substrate obtained in Examples 1 to 10 and dried. Then, the artificial leather sheet substrate was embossed to have a natural leather-like crepe surface, made flexible and dyed to obtain each grain-finished artificial leather. The obtained grain-finished artificial leathers were all closely similar to grain natural leathers.

EXAMPLE 11

A 10-mo% isophthalic acid-modified PET (mp = 234°C) added with 0.5% by mass of carbon black (island component) and a 10-mol% ethylene-modified vinyl alcohol copolymer (sea component, "Exceval" available from Kuraray Co., Ltd., saponification degree = 98.4 mol%, mp = 210°C) were spun into composite fibers, which were then drawn to obtain sea-island composite fibers (sea/island = 30/70 by mass, number of island segments = 64, single fiber fineness = 5.5 dtex, density = 1.27 g/cm$^3$). The percent residual of pigment in the composite fibers was 99% by mass. After crimping, the composite fibers were cut into staples of 51 mm long, which were then carded into a web having a mass per unit area of 120 g/m$^2$.

Separately, the same sea component and island component were spun into composite fibers, which were then drawn by roller plate under common conditions to obtain sea-island composite filaments (sea/island = 40/60 by mass, number of island segments = 36, single fiber fineness = 2.3 dtex, density = 1.23 g/cm$^3$). The percent residual of pigment in the composite filaments was 99% by mass. Then, the composite filaments thus produced were made into multifilaments of 24 filaments having a fineness of 55 dtex. After twisting to have a number of twist of 500 twists/m, the multifilaments were made into a plain woven fabric having a weave density of 105 x 84/inch and a mass per unit area of 120 g/m$^2$.

Tow pieces of the webs and one piece of the plain woven fabric were superposed with the plain woven fabric disposed between the webs, needle-punched at a density of 1500 punches/cm$^2$, dry heat-shrunk at 190°C to reduce the area by 20%, and heat-pressed at 175°C to obtain a united laminate structure having a mass per unit area of 501 g/cm$^2$, an apparent density of 0.76 g/cm$^3$ and a thickness of 0.66 mm. The surface exposure of the fiber forming the woven fabric was 2.0%.

A water dispersion of elastic polymer having a concentration of 40% by mass, a viscosity of 20 cP and a density of 1.02 g/cm$^3$ was prepared by mixing a water-dispersible gray pigment ("Ryudye W Gray" available from Dainippon Ink & Chemicals, Inc.) and an aqueous emulsion of polyether polyurethane ("Evafanol AP-12" available from Nicca Chemical Co., Ltd.) in a proportion of pigment/emulsion = 1.8/100 by mass based on solid contents.

The water dispersion of elastic polymer was impregnated into the united laminate structure at a traveling speed of 2.5 m/min under a 20000 Pa impregnating pressure by using a lip coater available from Hirano Tecseed Co., Ltd. (lip direct type). The elastic polymer was coagulated by heat drying at 160°C for 3.5 min in a hot air drier. After cutting away the non-impregnated portions on both sides in 5 cm width, the vinyl alcohol copolymer was removed by extraction with a 90°C hot water to convert the composite fiber into microfine fibers, thereby obtaining an artificial leather sheet substrate. The ratio, total microfine fibers/elastic polymer, was 78.5/21.5 by mass. The artificial leather sheet substrate was free from wrinkle and elongation, showed a good appearance, and had a uniform feel and excellent properties like natural leathers.

After napping at lease one surface by buffing, the artificial leather sheet substrate was high-pressure dyed at 130°C by using Sumikaron UL disperse dyes (0.24 owf% of Yellow 3RF, 0.34 owf% of Red GF and 0.70 owf% of Blue GF each available from Sumitomo Chemical Company, Limited), 2 owf% of Antifade MC-500 (available from Meisei Chemical Works, Ltd.), and 1 g/L of Disper TL (available from Meisei Chemical Works, Ltd.). Successively after dyeing, the artificial leather sheet substrate was subjected to an alkali reduction/washing treatment at 70°C for 50 min by using a 6 g/L aqueous solution of sodium hydroxide and a 6 g/L aqueous solution of "Tec Light" (available from Tokai Electro Chemical Co., Ltd), neutralization at 60°C for 10 min by a 1 g/L aqueous solution of acetic acid, washing, drying at 120 to 150°C, and a reverse seal brushing finish.

Even after repeated productions in the same manner as above, a good dyeability was maintained without causing the contamination and adhesion of dyeing machine attributable to the elastic polymer and the variation of dyed color. In the artificial leather thus obtained, the single fiber fineness was 0.067 dtex for the microfine fibers constituting the nonwoven fabric layer A and 0.043 dtex for the microfine fibers constituting the knitted or woven fabric layer B, the density was 0.65 g/cm$^3$, and the microfine fibers constituting the knitted or woven fabric layer B had random, slight crimps. The surface exposure was 2.0%. The artificial leather was dyed in uniform gray with no difference in the colors of microfine fibers and elastic polymer and excellent in suede appearance, surface touch and drapeability. The tear strength was 1.13 kg/(100 g/m$^2$) and the color fastness to light was the rating 4.

**Claims**

1.  An artificial leather sheet substrate comprising at least one nonwoven fabric layer A, a knitted or woven fabric layer B and an elastic polymer C, which satisfies the following requirements 1 to 6:

    (1) the nonwoven fabric layer A is made of microfine staples having a fiber length of 18 to 110 mm and a single fiber fineness of 0.0003 to 0.4 dtex;
    (2) the knitted or woven fabric layer B is made of microfine filaments randomly and slightly crimped having a single fiber fineness of 0.0003 to 3.5 dtex;
    (3) the nonwoven fabric layer A and the knitted or woven fabric layer B are entangled to form a united laminate structure;
    (4) a surface exposure of the microfine filaments constituting the knitted or woven fabric layer B on a surface of the nonwoven fabric layer A opposite to its surface bonded to the knitted or woven fabric B is 0.3 to 20% by area;
    (5) the united laminate structure of the nonwoven fabric layer A and knitted or woven fabric layer B is impregnated with the elastic polymer C; and

(6) a density of the artificial leather sheet substrate is 0.50 to 0.85 g/cm$^3$

2. The artificial leather sheet substrate according to Claim 1 having a tear strength of 0.75 to 1.75 kg/(100 g/m$^2$) on average in a machine direction and a cross-wise direction.

3. The artificial leather sheet substrate according to Claim 1 or 2, wherein the single fiber fineness of the microfine filaments constituting the knitted or woven fabric layer B is 0.0003 to 0.4 dtex.

4. The artificial leather sheet substrate according to any one of Claims 1 to 3, wherein a number of twist of the microfine filaments constituting the knitted or woven fabric layer B is 10 to 650 twists/m.

5. The artificial leather sheet substrate according to any one of Claims 1 to 4, wherein the ratio of the knitted or woven fabric layer B to the nonwoven fabric layer A is 10 to 50% by mass.

6. The artificial leather sheet substrate according to any one of Claims 1 to 5, wherein the microfine staples constituting the nonwoven fabric layer A and/or the microfine filaments constituting the knitted or woven fabric layer B contains 0.01 to 5% by mass of pigment.

7. The artificial leather sheet substrate according to any one of Claims 1 to 6, wherein the elastic polymer C is impregnated in an amount of 5 to 45% by mass of the artificial leather sheet substrate.

8. An artificial leather produced from the artificial leather sheet substrate as defined in any one of Claims 1 to 7.

9. The artificial leather according to Claim 8 made into a grain-finished or semi-grain-finished artificial leather.

10. The artificial leather according to Claim 8 made into a suede-finished or nubuck-finished artificial leather.

11. An artificial leather article made of the artificial leather as defined in any one of Claims 8 to 10, which is selected from shoes, balls, furniture, seats for vehicles, clothes, gloves, baseball gloves, bags, belts and supporters.

12. A method for producing an artificial leather sheet substrate, which comprises the following sequential steps of:

(i) producing a web from microfine fiber-forming composite staples having a fiber length of 20 to 110 mm, which comprises a water-soluble, thermoplastic vinyl alcohol-based polymer Sa and a crystalline thermoplastic polymer Sb having a melting point of 160°C or higher;
(ii) superposing the web obtained in the step i and a knitted or woven fabric to obtain superposed fabrics, and entangling the superposed fabrics by a needle punching and/or a high-pressure stream of water to obtain a united laminate structure of the web and the knitted or woven fabric, the knitted or woven fabric being made of microfine fiber-forming composite filaments which comprises a water-soluble, thermoplastic vinyl alcohol-based polymer Fa and a crystalline thermoplastic polymer Fb having a melting point of 160°C or higher;
(iii) shrinking the united laminate structure obtained in the step ii to reduce a surface area to 40 to 90% of a surface area before shrinking;
(iv) impregnating the united laminate structure after the shrinking treatment with a solution or dispersion of an elastic polymer and solidifying the elastic polymer; and
(v) removing the water-soluble, thermoplastic vinyl alcohol-based polymers Sa and Fa by dissolution into water to convert the microfine fiber-forming composite staples into bundles of microfine staples having a single fiber fineness of 0.0003 to 0.4 dtex and the microfine fiber-forming composite filaments into bundles of microfine filaments having a single fiber fineness of 0.0003 to 3.5 dtex;

with the proviso that the step iv and the step v may be carried out in a reverse order.

13. The method according to Claim 12, wherein the crystalline thermoplastic polymer Sb and/or the crystalline thermoplastic polymer Fb contains 0.01 to 5% by mass of pigment.

14. The method according to Claim 13, wherein a percent residual of pigment in the microfine staples and/or the microfine filaments after removing the water-soluble, thermoplastic vinyl alcohol-based polymers Sa and Fa is 90% by mass or more.